Europäisches Patentamt

European Patent Office

Office européen des brevets

(19)

(11) Publication number: **0 265 074 B1**

# EUROPEAN PATENT SPECIFICATION

(12)

(45) Date of publication of patent specification: **24.04.91**

(51) Int. Cl.⁵: **D01D 5/36**, D01F 8/04, G02B 6/06, B29D 11/00

(21) Application number: **87308244.0**

(22) Date of filing: **17.09.87**

(54) Multifilament type plastic optical fiber.

(30) Priority: **22.09.86 JP 221781/86**

(43) Date of publication of application:
**27.04.88 Bulletin 88/17**

(45) Publication of the grant of the patent:
**24.04.91 Bulletin 91/17**

(84) Designated Contracting States:
**DE FR GB IT NL**

(56) References cited:
**EP-A- 0 131 058**
**EP-A- 0 207 705**
**FR-A- 2 252 586**
**GB-A- 2 057 344**
**US-A- 3 556 635**

(73) Proprietor: **MITSUBISHI RAYON CO., LTD.**
**3-19, Kyobashi 2-chome Chuo-Ku**
**Tokyo 104(JP)**

(72) Inventor: **Sakunaga, Kenichi**
**10-22, Hon-cho 1-chome**
**Otake-shi Hiroshima(JP)**
Inventor: **Terada, Hiromu**
**3-1, Kurokawa 3-chome**
**Otake-shi Hiroshima(JP)**
Inventor: **Nieda, Yoshiaki**
**2-1, Kurokawa 3-chome**
**Otake-shi Hiroshima(JP)**
Inventor: **Fukahori, Naoyuki**
**3-19-43, Terao Kita**
**Ayase-shi Kanagawa(JP)**

(74) Representative: **West, Alan Harry et al**
**R.G.C. Jenkins & Co. 26 Caxton Street**
**London SW1H 0RJ(GB)**

EP 0 265 074 B1

**Description**

The present invention relates to the manufacture of multifilamente plastics optical fibers having in cross-section 10 to 10,000 islands having light-transmitting characteristics, which are valuable as image-transmitting optical fibers or light guides.

Multifilament plastics optical fibers have the advantage over multifilament optical fibers comprising glass filaments in that their flexibility is high, their handling properties are good and individual filaments constituting the fiber are not broken by bending. Accordingly, attempts have been made to develop and utilize multifilament plastics optical fibers. Reference can be made for example, to the processes described in U.S. Patent No. 3,556,635 and Japanese Unexamined Patent Publication No. 56-39505.

The multifilament plastics optical fibers described in U.S. Patent No. 3,556,635 is prepared according to a process in which spinning is carried out in a spinning apparatus as shown in Fig. 1 of this U.S. patent, to which a spinning nozzle having a structure as shown in Fig. 2 of this U.S. patent is attached. Accordingly, this multifilament plastics optical fiber has an angular cross-section in which light-transmitting islands having a substantially rectangular cross-section are arranged, as shown in Fig. 3 of the U.S. patent.

This multifilament plastics optical fiber is defective in that since the cross-section of the light-transmitting islands exerting the light-transmitting function is rectangular, the light transmission characteristics are insufficient.

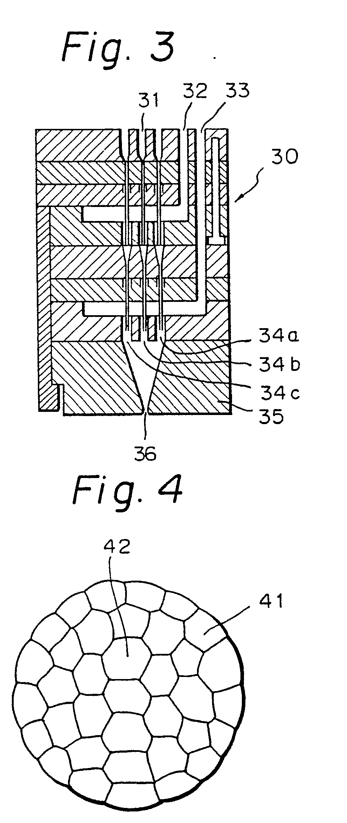

Japanese Unexamined Patent Publication No. 56-39505 describes a process for the preparation of a multifilament plastics optical fiber, and it is taught that a spinneret disclosed in Japanese Unexamined Patent Publication No. 54-116417 is used for the production of this multifilament plastics optical fiber. The sectional structure of this spinneret is as shown in Fig. 3 of the accompanying drawings. Referring to Fig. 3, according to this known process, a core-forming polymer is supplied from 31, a sheath-forming polymer is supplied from 32 and a sea-forming polymer is supplied from 33, a three-layer true conjugate yarn is spun out from 34 and gathered and integrated in a gathering hole 36 of a gathering orifice plate 34 to obtain a multifilament plastics optical fiber. According to this process, if the occupancy ratio of the sea in the cross-section of the multifilament plastics optical fiber is at least 40%, that is, the number of the light-transmitting islands is small, the islands are relatively uniform in the cross-sectional shape, but the element density of the image transmitted by this optical fiber is low and no practically good result can be obtained. If a multifilament plastics optical fiber in which the occupancy ratio of the sea is lower than 10%, is prepared according to this process, the cross-section of the islands present in the peripheral portion of the cross-section of the optical fiber is tetragonal or heptagonal, as shown in Fig. 4 of the accompany drawings, but islands present in the interior of the cross-section of the optical fiber have heptagonal to nonagonal cross-sections. Transmission of an image is substantially impossible using this optical fiber, and the respective islands constituting the multifilament plastics optical fiber are different from one another in light-transmitting characteristics and the light quantity unevenness over the entire section is inevitably large.

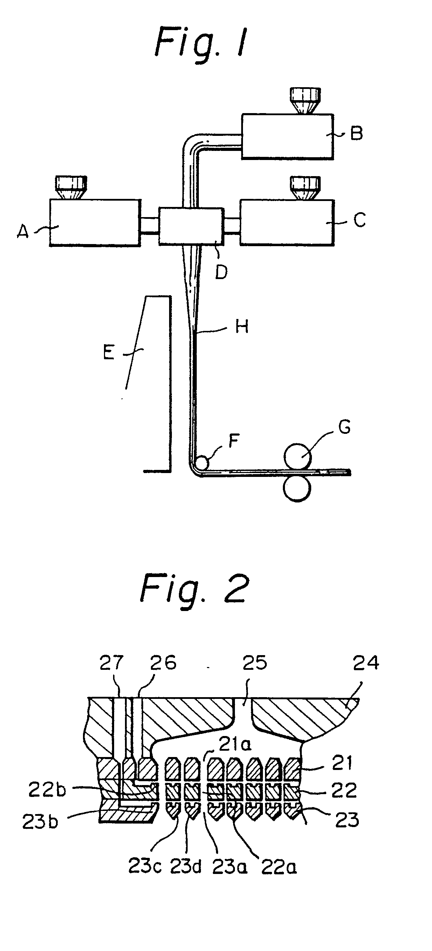

Research to develop a multifilament plastics optical fiber free of such defects has revealed that this object can be attained by using a spinneret, as shown in Fig. 2, not equipped with a gathering orifice plate, and fusion-bonding a three-layer true conjugate yarn spun from the spinneret just below the spinneret.

In accordance with the present invention, therefore, there is now provided a process, for the manufacture of a multifilament plastics optical fiber having a substantially uniform cross-section and an islands-in-sea structure in which there are arranged in the sea 10 to 10,000 islands each having a substantially uniform cross-section of diameter 10 to 200 μm and the optical fiber cross-section sea occupancy ratio is 5 to 40%, the process comprising the steps of:

constructing a true conjugate spinning spinneret having (a) an orifice plate having 10 to 10,000 coreforming holes, (b) an orifice plate having 10 to 10,000 sheath-forming holes and (c) an orifice plate having 10 to 10,000 sea-forming holes having an opening expanded downward, the lower ends of every two adjacent sea-forming holes being placed in contact with each other on the lower end face of the orifice plate so that a fiber comprising the sea and islands having a core-sheath structure is formed by true conjugate spinning without using a filament-gathering orifice plate;

supplying a core-forming polymer, a sheath-forming polymer and a sea-forming polymer to respective spinning holes;

melt-spinning the polymers under conditions such that the spinning draft D defined by the formula (I)

2

$$D = \text{(hole diameter of core-forming orifice plate)}^2 / \text{(core diameter of multifilament optical fiber)}^2 \qquad (I)$$

has a value of 20 to 5,000;
fusion-bonding the spun filaments on the lower end face of the spinneret; and
taking up the resulting fiber.

The invention is described below in greater detail by way of example only with reference to the accompanying drawings, in which

Figure 1 illustrates a spinning apparatus used in the present invention for producing a multifilament plastics optical fiber;

Fig. 2 illustrates the cross-section of a spinneret of the spinning apparatus shown in Fig. 1;

Fig. 3 is a sectional view of a conventional spinning apparatus;

Fig. 4 is a sectional view of a conventional multifilament plastics optical fiber;

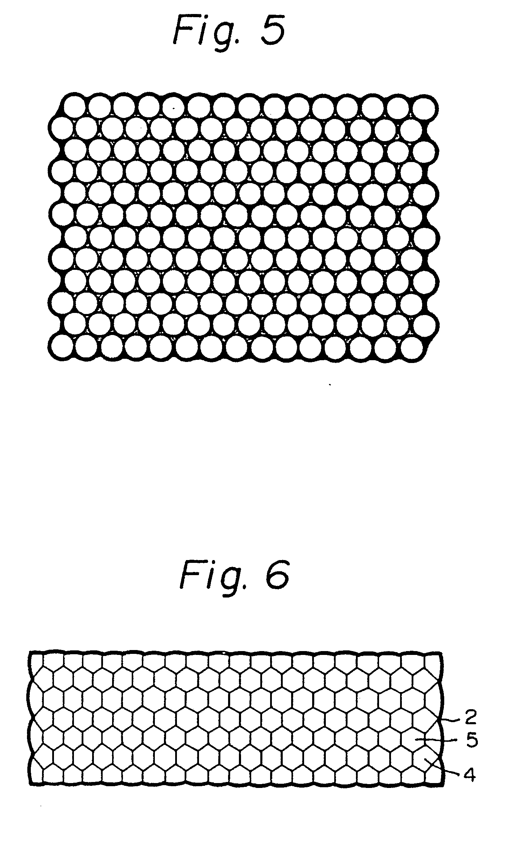

Figs. 5 and 6 are sectional views of examples of the multifilament plastics optical fiber of the present invention;

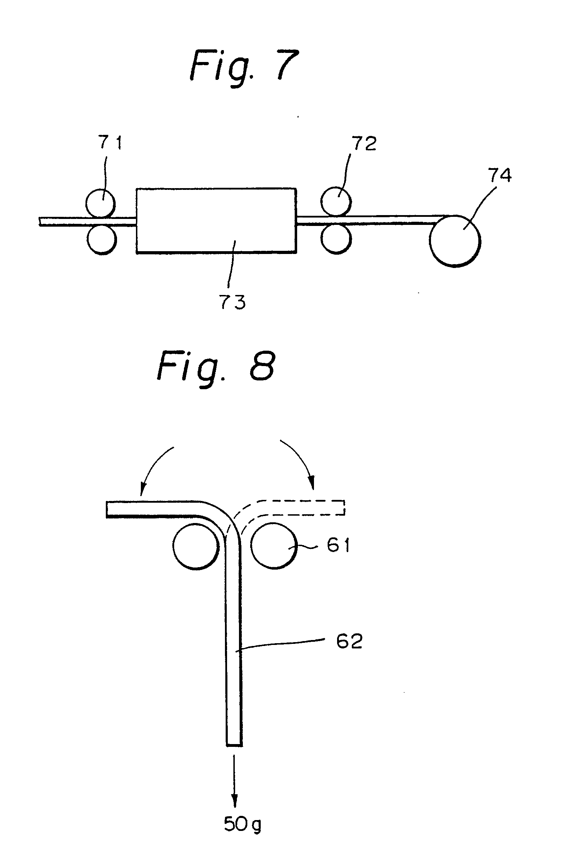

Fig. 7 illustrates an example of apparatus for heat-treating a multifilament plastics optical fiber; and

Fig. 8 illustrates the repeated bending test, described below.

Preferably, the multifilament plastics optical fiber produced by the present invention has a uniform cross-section and an islands-in-sea structure, in which 10 to 10,000 islands are arranged in the sea, each have a substantially uniform cross-section of a diameter 10 to 200 $\mu$m and the opticle fiber the cross-section sea occupancy is 5 to 20%. More preferably, the islands have a substantially circular or hexagonal cross section, and are arranged in a zigzag-stacked structure.

Figure 1 illustrates the steps of preparing the multifilament plastics optical fiber according to the present invention, and in Fig. 1, symbols A, B, C, D, E, F, G and H represent a core-forming polymer-supplying extruder, a sheath-forming polymer-supplying extruder, a sea-forming polymer-supplying extruder, a spinneret, a cooler, a guide roll, take-up roll and a spun multifilament plastics optical fiber, respectively.

Figure 2 illustrates the cross-section of the spinneret D, and reference numeral 24 represents a distributing plate for distributing the core-forming polymer, sheath-forming polymer and sea-forming polymer constituting the multifilament plastics optical fiber, reference numeral 25 represents a core-forming polymer-supplying hole, reference numeral 26 represents a sheath-formin g polymer-supplying hole, reference numeral 27 represents a sea-forming polymer-supplying hole, reference numeral 21 represents a core-forming orifice plate, reference numeral 21a represents a core-forming nozzle hole, reference numeral 22 represents a sheath-forming orifice plate, reference numeral 22a represents a sheath-forming nozzle hole, reference numeral 23 represents a sea-forming orifice plate, and a reference numeral 23a represents a sea-forming nozzle hole. The core-forming polymer supplied from 21a forms a molten polymer stream having a substantially circular section and is spun out from 22a through 23a. The sheath-forming polymer supplied from 26 overflows a circular projection 22b circularly surrounding the lower end of the core-forming nozzle hole and is bonded in a uniform thickness to the periphery of the core-forming polymer stream while forming an island, and the so-formed island is delivered to the sea-forming nozzle hole 23a. The sea-forming polymer supplied from 27 overflows a circular projection surrounding the lower end of the sheath-forming nozzle hole, flows downward while adhering to the periphery of the sheath-forming polymer, further flows down along a downwardly expanded oblique side wall formed on the lower end face of the sea-forming orifice plate, and fusion-bonds the islands, that is, sheath-core filaments, to one another while filling the spaces among the islands, whereby a prototype of the multifilament plastics optical fiber is formed.

In the present invention, a plurality of core/sheath/sea three-component true conjugate structures are formed within the spinneret, and then these structures are fusion-bonded to one another on the lower end face of the sea-forming orifice plate and taken up. Thus, a multifilament plastics optical fiber in which the islands present in the cross-section of the fiber have a uniform cross-sectional shape, as shown in Fig. 5 or 6, is obtained. In order to prepare this multifilament type plastic optical fiber, it is necessary that the shape of the spinneret, especially the shape of the lower end face of the sea-forming orifice plate, should be specified so that the spinning draft D defined by the formula [I] is 20 to 5,000.

By setting the spinning draft to 20 or more, fusion-bonding and integration of the true conjugate yarns on the lower end face of the spinneret can be performed very smoothly. In the process for preparing a multifilament plastics optical fiber by using the conventional composite spinneret as shown in Fig. 3, an island of the core-sheath structure is formed by a core supplied from 31 and a sheath supplied from 32, and then, a polymer supplied from 33 forms the sea surrounding the island. Thus, individual true conjugate yarns are spun out from the lower ends 34a, 34b and 34c of the spinneret and are gathered and integrated by a gathering hole 36 of a gathering orifice plate 35. Accordingly, the multifilament plastic optical fiber having a degree of plasticity undergoes a strong force acting toward the interior from the outside, and therefore, the cross-sectional shapes of the islands inevitably become irregular and polygonal, as shown in Fig. 4. In contrast, in the present invention, by using a spinneret having a cross-sectional structure as shown in Fig. 2 and setting the spinning draft at 20 to 5,000, many extrudates having a true conjugate structure comprising an island of the core-sheath structure and the sea surrounding the island flow down along downwardly expanded inclined faces 23c and 23d on the lower end of the orifice plate 23 while the sectional areas of the extrudates are being increased, and these extrudates are fusion-bonded to one another to form a multifilament plastics optical fiber, in which the cross-sectional shapes of the islands present in the interior are uniform, as shown in Fig. 5 or 6.

If the spinning draft is too high, the strain imposed on the optical fiber is drastically increased, and a multifilament plastics optical fiber having good light-transmitting characteristics cannot be obtained. In order to eliminate this disadvantage, in the present invention, preferably the spinning draft is up to 5,000.

In order to improve the light-transmitting characteristics and toughness of the multifilament plastics optical fiber, preferably the optical fiber is heat-treated at a temperature of 100 to 300° C. In view of the relation to the spinning draft, this heat treatment can be carried out while drawing the multifilament plastics optical fiber at a draw ratio of about 1 to about 3 or under a shrinking relaxation of up to 40%.

Figure 7 illustrates an apparatus to be used for heat-treating the multifilament plastics optical fiber. In Fig. 7, reference numerals 71, 72, 73 and 74 represent a feed roller, a take-up roller, a heat-treating machine and a winder, respectively. The heat-treating machine may be directly connected to the spinning apparatus shown in Fig. 1. In this case, in view of the operation efficiency, preferably one roller is used either as the take-up roll G shown in Fig. 1 or the feed roller 71 shown in Fig. 7.

The cross-section of the multifilament plastics optical fiber can have a substantially rectangular shape as shown in Fig. 5 or 6 or a circular, star-like or other polygonal shape. The spinning holes of the spinneret are arranged so that the intended cross-sectional shape is obtained.

As examples of the plastics for forming the core and sheath components of islands of the multifilament plastics optical fiber, there can be mentioned polymethyl methacrylate ($n = 1.49$), a copolymer ($n = 1.47$ to 1.50) composed mainly of methyl methacrylate, polystyrene ($n = 1.58$), a copolymer ($n = 1.50$ to 1.58) composed mainly of styrene, a styrene/acrylonitrile copolymer ($n = 1.56$), poly-4-methylpentene-1 ($n = 1.46$), an ethylene/vinyl acetate copolymer ($n = 1.46$ to 1.50), a polycarbonate ($n = 1.50$ to 1.57), polychlorostyrene ($n = 1.61$), polyvinylidene chloride ($n = 1.63$), polyvinyl acetate ($n = 1.47$), a methyl methacrylate/styrene, vinyltoluene or $\alpha$-methylstyrene/maleic anhydride terpolymer or quadripolymer ($n = 1.50$ to 1.58), polydimethylsiloxane ($n = 1.40$), polyacetal ($n = 1.48$), polytetrafluoroethylene ($n = 1.35$), polyvinylidene fluoride ($n = 1.42$), polytrifluoroethylene ($n = 1.40$), polyperfluoropropylene ($n = 1.34$), fluoroethylene copolymers or terpolymers ($n = 1.35$ to 1.40), a polyvinylidene fluoride/polymethyl methacrylate blend ($n = 1.42$ to 1.46), copolymers composed mainly of a fluoromethacrylate represented by the general formula $CH_2 = C(CH_3)COORf$ in which Rf stands for $(CH_2)_n(CF_2)_nH$ ($n = 1.37$ to 1.42), $(CH_2)_m(CF_2)_nF$ ($n = 1.37$ to 1.40), $CH-(CF_3)_2$ ($n = 1.38$), $C(CF_3)_3$ ($n = 1.36$), $CH_2CF_2CHFCF_3$ ($n = 1.40$) or $CH_2CF(CF_3)_2$ ($n = 1.37$), copolymers of these fluoromethacrylates ($n = 1.36$ to 1.40), copolymers of such a fluoromethacrylate with methyl methacrylate ($n = 1.37$ to 1.43), polymers composed mainly of a fluoroacrylate represented by the general formula $CH_2 = CH \bullet COOR'f$ in which R'f stands for $(CH_2)_m(CF_2)_nF$ ($n = 1.37$ to 1.40), $(CH_2)_m(CF_2)_nH$ ($n = 1.37$ to 1.41), $CH_2CF_2CHF-CF_3$ ($n = 1.41$) or $CH(CH_3)_2$ ($n = 1.38$), copolymers of these fluoroacrylate ($n = 1.36$ to 1.41), copolymers of such a fluoroacrylate and a fluoromethacrylate as described above ($n = 1.36$ to 1.41), copolymers of these fluoroacrylate and fluoromethacrylate with methyl methacrylate ($n = 1.37$ to 1.43), and homopolymers and copolymers ($n = 1.37$ to 1.42) composed mainly of a 2-fluoroacrylate represented by the general formula $CH_2 = CF \bullet COOR''f$ in which R''f stands for $CH_3$, $(CH_2)_m(CF_2)_nF$, $(CH_2)_m(CF_2)_nH$, $CH_2CF_2CHFCF_3$ or $C(CF_3)_2$.

As examples of the plastics used as the sea component, there can be mentioned polyamides, polyester elastomers, polyamide elastomers, polystyrene elastomers, polyolefin elastomers, poly-4-methylpentene-1, polyvinylidene fluoride, ionomers, ethylene/ethyl acrylate copolymers, ethylene/vinyl acetate copolymers, vinylidene fluoride copolymers, polymethyl methacrylate, polystyrene, ABS, polybutylene terephthalate and polyethylene. In order to obtain a multifilament plastics optical fiber capable of transferring a sharp and bright image, preferably a polymer having a flowability larger than that of the sheath-forming polymer for forming islands at the spinning step is selected as the sea-forming polymer.

The present invention will now be described in detail with reference to the following examples.

In the following examples, the softness was evaluated by measuring the resistance against repeated bending with an apparatus shown in Fig. 8. Referring to Fig. 8, the multifilament plastics optical fiber 62 was repeatedly bent around bending rods 61 at a bending radius of 25 mm and a bending angle of 180°, and when the retention ratio of the quantity of transmitted light based on the initial value was lower than 80%, the number of bending repetitions was counted.

Example 1

A conjugate spinning spinneret having a sectional structure as shown in Fig. 2 was attached at the part D of the spinning apparatus shown in Fig. 1, and spinning was carried out under conditions shown in Fig. 1 by using polymethyl methacrylate as the core-forming polymer, a fluoroalkyl methacrylate polymer as the sheath-forming polymer and a vinylidene fluoride copolymer as the sea-forming polymer. The spinning operation was controlled so that the sea portions of true conjugate type extrudates were fusion-bonded to one another on the lower end face of the spinneret, whereby a multifilament plastics optical fiber having a cross-sectional shape as shown in Fig. 5 was formed. The characteristics of the multifilament plastics optical fiber are shown in Table 1.

Multifilament plastics optical fibers of samples 1 to 9 in Table 1 had good image-transmitting characteristics. However, the multifilament plastics optical fiber of sample 10 was inferior in image-transmitting characteristics, and the unevenness of the quantity of transmitted light in the cross-section of the optical fiber was very large.

Table 1

| Sample No. | 1 | 2 | 3 | 4 | 5 | 6 | 7 | 8 | 9 | 10 |
|---|---|---|---|---|---|---|---|---|---|---|
| Island Diameter ~~⌀~~ ($\mu m$) | 10 | 20 | 25 | 30 | 50 | 80 | 100 | 30 | 10 | 50 |
| Number of Islands in Cross-Section | 3000 | 1500 | 1500 | 1500 | 1350 | 1350 | 1350 | 1350 | 3000 | 1350 |
| Spinning Draft D | 2500 | 1200 | 780 | 540 | 580 | 625 | 730 | 530 | 2500 | 580 |
| Initial Light-Transmitting Characteristics (dB/km) (at 650 mm) | 1500 | 900 | 850 | 750 | 700 | 600 | 500 | 500 | 1400 | 1500 |
| Resistance against Repeated Bending (times) | >1000 | >1000 | >1000 | 550 | 550 | >1000 | >1000 | 550 | >1000 | 450 |
| Sea Occupancy Ratio in Cross-Section (%) | 18 | 17 | 15 | 13 | 13 | 11 | 11 | 25 | 33 | 5 |
| Cross-Sectional Shape of Islands of Core-Sheath Structure | circular | circular | circular | circular | circular | circular | circular | circular | circular | many polygonal shapes |
| Cross-Sectional Shape of Multifilament Optical Fiber | substantially rectangular | substantially rectangular | substantially rectangular | substantially rectangular | substantially rectangular | substantially rectangular | substantially rectangular | substantially rectangular | substantially rectangular | substantially rectangular |
| Remarks | present invention | present invention | present invention | present invention | present invention | present invention | present invention | present invention | present invention | comparison, longitudinal cracking readily caused |

EP 0 265 074 B1

Example 2

A multifilament plastics optical fiber having a cross-sectional shape as shown in Fig. 6 was prepared by performing drafting at a draft ratio of 600 and spinning using a spinneret having 210 holes and a cross-sectional shape shown in Fig. 2 and using polymethyl methacrylate as the core-forming polymer, a fluoroalkyl methacrylate polymer as the sheath-forming polymer and polymethyl methacrylate as the sea-forming polymer. The light transmission loss was 950 dB/km, the maximum island diameter was 20 $\mu$m, the sea occupancy ratio was 13%, and the resistance against repeated bending was 700 times.

## Claims

1. A process for the manufacture of a multifilament plastics optical fiber having a substantially uniform cross-section and an islands-in-sea structure in which there are arranged in the sea 10 to 10,000 islands each having a substantially uniform cross-section of diameter 10 to 200 $\mu$m and the optical fiber cross-section sea occupancy ratio is 5 to 40%, the process comprising the steps of:
constructing a true conjugate spinning spinneret having (a) an orifice plate having 10 to 10,000 core-forming holes, (b) an orifice plate having 10 to 10,000 sheath-forming holes and (c) an orifice plate having 10 to 10,000 sea-forming holes having an opening expanded downward, the lower ends of every two adjacent sea-forming holes being placed in contact with each other on the lower end face of the orifice plate so that a fiber comprising the sea and islands having a core-sheath structure is formed by true conjugate spinning without using a filament-gathering orifice plate;
supplying a core-forming polymer, a sheath-forming polymer and a sea-forming polymer to respective spinning holes;
melt-spinning the polymers under conditions such that the spinning draft D defined by the formula (I)

$$D = (\text{hole diameter of core-forming orifice plate})^2 / (\text{core diameter of multifilament optical fiber})^2 \quad (I)$$

has a value of 20 to 5,000;
fusion-bonding the spun filaments on the lower end face of the spinneret; and
taking up the resulting fiber.

2. A process according to claim 1, wherein following the fusion bonding step, the resulting fiber is heat-treated at a temperature of 100 to 300° C.

3. A process according to claim 1 or claim 2, wherein the sea occupancy ratio is 5 to 20%.

4. A process according to claim 3, wherein the sea occupancy ratio is 10 to 20%.

5. A process according to any one of claims 1 to 4, wherein the islands have a substantially circular or hexagonal cross-section and are arranged in a zigzag-stacked structure.

6. A process according to claim 5, wherein the optical fiber has a substantially rectangular cross-section.

## Revendications

1. Un procédé pour la fabrication d'une fibre optique multifilamentaire en matière plastique présentant une section transversale sensiblement uniforme et une structure d'îlots dans une mer, dans laquelle sont disposés dans la mer 10 à 10 000 îlots présentant chacun une section transversale sensiblement uniforme de 10 à 200 μm de diamètre, le taux d'occupation de la mer dans la section transversale de la fibre optique étant de 5 à 40 %, le procédé comprenant les opérations consistant :

à réaliser une filière de filage de conjugué vrai comportant (a) une plaque à orifices présentant 10 à 10 000 trous de formation de coeur, (b) une plaque à orifices présentant 10 à 10 000 trous de formation de gainage et (c) une plaque à orifices présentant 10 à 10 000 trous de formation de mer comportant un débouché s'épanouissant vers le bas, les extrémités inférieures de chaque paire de trous de formation de mer adjacents étant placées en contact mutuel sur la face terminale inférieure de la plaque à orifices de sorte qu'une fibre comprenant la mer et des îlots présentant une structure coeur-gainage se trouve formée par filage de conjugué vrai sans faire appel à une plaque à orifices de rassemblement de filaments ;

à délivrer un polymère de formation de coeur, un polymère de formation de gainage et un polymère de formation de mer aux trous de filage respectifs ;

à filer en fusion les polymères dans des conditions telles que le rapport d'étirage de filage D défini par la formule (I)

$$D = \frac{(\text{diamètre des trous de la plaque à orifices de de formation de coeur})^2}{(\text{diamètre des coeurs de la fibre optique multifilamentaire})^2} \qquad (I)$$

ait une valeur de 20 à 5000 ;
à souder par fusion les filaments filés sur la face terminale inférieure de la filère ; et
à envider la fibre obtenue.

2. Un procédé selon la revendication 1, dans lequel, à la suite de l'opération de soudage par fusion, la fibre obtenue est traitée thermiquement à une température de 100 à 300°C.

3. Un procédé selon la revendication 1 ou la revendication 2, dans lequel le taux d'occupation de la mer est de 5 à 20 %.

4. Un procédé selon la revendication 3, dans lequel le taux d'occupation de la mer est de 10 à 20 %.

5. Un Un procédé selon l'une quelconque des revendications 1 à 4, dans lequel les îlots sont de section transversale sensiblement circulaire ou hexagonale et sont disposés selon une structure en quinconce.

6. Un procédé selon la revendication 5, dans lequel la fibre optique a une section transversale sensiblement rectangulaire.

**Ansprüche**

1. Verfahren zur Herstellung einer optischen Multifilament-Kunststoffaser mit im wesentlichen einheitlichem Querschnitt und einer Inseln-im Meer-Struktur, bei der in dem Meer 10 bis 10.000 Inseln mit jeweils im wesentlichen einheitlichem Querschnitt mit einem Durchmesser von etwa 10 bis 200 μm vorliegen und das Meer-BesetzungsverhäĐltnis im Querschnitt der optischen Faser 5 bis 40% beträgt, mit den Schritten:

Ausbilden einer echten Spinndüse für das Mehrkomponentenspinnen mit (a) einer Öffnungsplatte mit 10 bis 10.000 Kern-bildenden Löchern, (b)einer Öffnungsplatte mit 10 bis 10.000 Hüllen-bildenden Löchern und (c) einer Öffnungsplatte mit 10 bis 10.000 Meer-bildenden Löchern mit sich nach unten vergrößernden Öffnungen, wobei die unteren Enden von jeweils zwei benachbarten Meer-bildenden Löchern auf der unteren Endfläche der Öffnungsplatte miteinander in Kontakt stehen, so daß durch echtes Mehrkomponentenspinnen ohne eine die Filamente vereinigende Öffnungsplatte eine Faser mit dem Meer und Inseln mit einer Hülle-Kern-Struktur gebildet wird:

Zuführen eines Kern-bildenden Polymers, eines Hüllen-bildenden Polymers und eines Meer-bildenden Polymers zu den entsprechenden Spinnlöchern;
Schmelzverspinnen der Polymeren unter solchen Bedingungen, daß der-durch die folgende Formel (I) definierte Spinn-Zug D

$$D = (\text{Lochdurchmesser der Kern-bildenden Öffnungsplatte})^2 / (\text{Kerndurchmesser der optischen Multifilamentfaser})2 \qquad (I)$$

einen Wert von 20 bis 5.000 aufweist;
Schmelzverbinden der versponnenen Filamente auf der unteren Endfläche der Spinndüse; und
Aufnehmen der erhaltenen Faser.

2.  Verfahren nach Anspruch 1, worin die erhaltene Faser nach dem Schritt des Schmelzverspinnens bei einer Temperatur von 100 bis 200 °C wärmebehandelt wird.

3.  Verfahren nach Anspruch 1 oder 2, worin das Mehr-Besetzungsverhältnis 5 bis 20% beträgt.

4.  Verfahren nach Anspruch 3, worin das Mehr-Besetzungsverhältnis 10 bis 20% beträgt.

5.  Verfahren nach einem der Ansprüche 1 bis 4, worin die Inseln einen im wesentlichen kreisförmigen oder hexagonalen Querschnitt aufweisen und in einer zick-zack-förmigen Anordnung vorliegen.

6.  Verfahren nach Anspruch 5, worin die optische Faser einen im wesentlichen rechteckigen Querschnitt aufweist.

*Fig. 1*

*Fig. 2*

# Fig. 3

# Fig. 4

EP 0 265 074 B1

Fig. 5

Fig. 6

12

# Fig. 7

# Fig. 8